# EUROPÄISCHE PATENTSCHRIFT

(11) **EP 1 946 906 B1**
(45) Veröffentlichungstag und Bekanntmachung des Hinweises auf die Patenterteilung: **20.05.2009**
(21) Anmeldenummer: 08000209.0
(22) Anmeldetag: 08.01.2008
(51) Int. Cl.: B29C 67/00, B29C 47/00

(54) **Verfahren zum Verschliessen der Stirnseite einer Hohlkammerplatte sowie Vorrichtung zur Durchführung dieses Verfahrens**
Method for closing the front side of a translucent panel and device for performing this method
Procédé destiné à la fermeture du côté frontal d'une plaque de chambre creuse ainsi que dispositif d'exécution du procédé

(30) Priorität: 22.01.2007 DE 102007004049
(43) Veröffentlichungstag der Anmeldung: 23.07.2008
(73) Patentinhaber: Wegener International GmbH, 52074 Aachen (DE)
(72) Erfinder: Dietrich, Michael, 52224 Stolberg (DE)
(74) Vertreter: Paul, Dieter-Alfred

(56) Entgegenhaltungen:
- EP-A- 0 152 616
- EP-A- 0 288 584
- EP-A- 0 566 338
- EP-A- 1 120 229
- DE-A1- 3 534 503
- DE-A1- 3 833 104
- DE-A1- 4 340 381
- US-A1- 2001 046 584

## Beschreibung

Die Erfindung betrifft ein Verfahren zum Verschließen der Stirnseite einer Hohlkammerplatte, die zwei außenliegende Plattenschichten mit dazwischen angeordneten Stegen aufweist, wobei die Hohlkammerplatte im Randbereich aufgeschmolzen wird und die Plattenschichten dort unter Bildung einer Schweißverbindung zusammengedrückt werden. Die Erfindung betrifft des weiteren eine Vorrichtung zum Verschließen der Stirnseite einer Hohlkammerplatte, wobei die Vorrichtung eine Halterung für die Hohlkammerplatte sowie einen Heizbalken zum Aufschmelzen eines Randbereichs der Hohlkammerplatte und einen Pressbalken zum Zusammenpressen der Plattenschichten im Randbereich aufweist und wobei eine Antriebseinrichtung vorhanden ist, über die Heiz- und Pressbalken zwischen einer Ruheposition und einer Arbeitsposition quer zu ihrer Längserstrekkung hin- und herbewegbar sind.

Hohlkammerplatten bestehen in der Regel aus zwei parallelen, außenliegenden Plattenschichten - gegebenenfalls auch zusätzlich innenliegenden Plattenschichten -, deren Dicken im Verhältnis zu ihrem Abstand gering sind, sowie aus einer Vielzahl zwischen den Plattenschichten angeordneten und diese verbindenden Stegen, wobei die Stege beliebige Formgebung haben können, beispielsweise auch noppenartig ausgebildet sein können. Solche Hohlkammerplatten haben im Verhältnis zu ihrer Steifigkeit ein geringes Gewicht. Typische Materialien für solche Hohlkammerplatten sind thermoplastische Kunststoffe. Die Hohlkammerplatten können Abmessungen im Meterbereich und Dicken zwischen 3 und 100 mm haben. Sie werden vornehmlich mittels Extrusionsverfahren hergestellt. Aus solchen Hohlkammerplatten werden beispielsweise Behälter zum Lagern und Transportieren von kleinen bis mittelgroßen Teilen hergestellt.

Aufgrund des kontinuierlichen Fertigungsprozesses durch z.B. Extrusion müssen die Hohlkammerplatten entsprechend den geometrischen Anforderungen des daraus hergestellten Produktes konfektioniert werden. Hierbei entstehen offene Stirnseiten, über die Feuchtigkeit und Schmutz in den Hohlraum zwischen den Plattenschichten eindringen kann. Außerdem bilden sich scharfe Schnittkanten. Deshalb müssen die offenen Stirnseiten solcher Hohlkammerplatten geschlossen werden.

Zum Verschließen der Stirnseiten von Hohlkammerplatten ist es beispielsweise aus der DE 35 34 503 C2 bekannt, die Stirnseiten mit Folien oder Bändern nach Art eines Umleimers abzudecken oder aber auch schmelzflüssigen Kunststoff mittels Extrusionstechnik aufzubringen. Alternativ dazu ist es bekannt, die Hohlkammerplatte im Randbereich mittels eines beheizten Pressbalkens zusammenzupressen, wobei auch zwei gegeneinander bewegliche Pressbalken vorgesehen sein können (vgl. DE 38 13 104 C2). Die Pressbalken erstrecken sich über die Länge der Stirnseite der zu bearbeitenden Hohlkammerplatte und werden beim Pressvorgang senkrecht zu ihr bewegt. Aufgrund der Beheizung des Pressbalkens wird der Randbereich der Hohlkammerplatte aufgeschmolzen, so dass die beiden Plattenschichten durch den Pressvorgang miteinander abdichtend verschweißt werden. Entsprechend der Formgebung der Kontaktfläche des Pressbalkens kann dabei eine gewünschte Ausformung des Randes der Hohlkammerplatte erzielt werden.

Bei einer Variante dieses Verfahrens wird ein beheizter Pressbalken verwendet, dessen Pressfläche als halbkreisförmige Nut ausgebildet ist, in die die Stirnseite der Hohlkammerplatte hineinpasst. Beim Pressvorgang wird der Pressbalken in der Ebene der Hohlkammerplatte gegen deren Stirnseite bewegt, wodurch der Randbereich aufgeschmolzen und gleichzeitig entsprechend der Formgebung der halbkreisförmigen Nut durch Zusammendrücken der Plattenschichten ebenfalls halbkreisförmig ausgeformt wird (vgl. EP 0 288 584 B1, EP 0 566 338 A1 und DE 43 40 381 A1).

Bei den vorbekannten Verfahren erfolgt das Aufschmelzen wegen der Einheit von Press- und Heizbalken von außen her, d.h. von den außenliegenden Oberflächen der Plattenschichten. Wegen der schlechten Wärmeleitung der verwendeten Kunststoffe dauert es relativ lange, bis die das Zusammenpressen der Plattenschichten zunächst verhindernden Stege im Randbereich aufgeschmolzen sind. Dies bedingt hohe Taktzeiten. Hinzu kommt, dass es zu Anhaftungen des geschmolzenen Kunststoffes an der Pressfläche kommt mit der Folge, dass der Rand uneben und unansehnlich und die Pressfläche des Pressbalkens verschmutzt wird. Dies wird auch nicht durch das in der DE 43 40 381 A1 vorgeschlagene Trennelement aus Edelstahl vermieden. Aufgrund der dann erforderlichen Reinigung kommt es zu langen Stillstandszeiten der Vorrichtung. Zudem bilden sich Grate, die den optischen Qualitätseindruck beeinträchtigen.

In der EP 1 120 229 ist eine Vorrichtung zum Verschließen der Stirnseite einer Hohlkammerplatte offenbart, bei der der Randbereich der Hohlkammerplatte mittels einer Infrarot-Heizeinrichtung, die an dem Rand der Hohlkammerplatte entlang geführt wird, erhitzt wird, bevor dann anschließend die Plattenschichten mittels Formrollen zusammengepresst werden. Auch hier besteht das Problem, dass es zu Anhaftungen des Kunststoffes an den Formrollen kommen kann, wodurch unansehnliche und verschmutzte Pressflächen entstehen.

Der Erfindung liegt die Aufgabe zugrunde, ein Verfahren der eingangs genannten Art so zu gestalten, dass schnellere Taktzeiten möglich sind und ein optisch einwandfreier Rand der Hohlkammerplatte ausformbar ist. Eine weitere Aufgabe besteht darin, eine für die Durchführung des Verfahrens geeignete Vorrichtung bereitzustellen.

Die erstgenannte Aufgabe wird erfindungsgemäß dadurch gelöst, dass die Stege sowie die Innenseite zumindest einer Plattenschicht, vorzugsweise die Innenseiten beider Plattenschichten, im Randbereich durch Hitzebeaufschlagung ausschließlich über die Stirnseite und/oder von innen her nur soweit aufgeschmolzen werden, dass die Außenseiten der Plattenschichten keine Schmelztemperatur erreichen. Grundgedanke der Erfindung ist demnach das Aufschmelzen ausschließlich durch Hitzebeaufschlagung der Hohlraumplatte von der Stirnseite oder von innen her. Durch diese Maßnahme wird die Hitzeeinwirkung dort konzentriert, wo sie für die Verpressbarkeit des Randbereichs benötigt wird, nämlich in dem Bereich zwischen den Plattenschichten zum Zwecke des sofortigen Aufschmelzens der dort vorhandenen Stege und zumindest einer der Innenseiten der Plattenschichten. Dies führt zu einem schnellen Aufschmelzen mit der Folge, dass der Randbereich nach kurzer Zeit verpressbar wird. Dabei wird das Aufschmelzen darauf begrenzt, dass die Außenseiten der Plattenschichten nicht aufschmelzen, sondern allenfalls plastisch werden. Auf diese weise wird ein Anhaften der Plattenschichten an den Pressflächen des bzw. der Pressbalken und damit dessen bzw. deren Verschmutzung sowie eine optische Beeinträchtigung des Randes der Hohlkammerplatte vermieden. Ein weiterer Vorzug der erfindungsgemäßen Lösung besteht darin, dass der bzw. die nicht beheizte(n) Pressbalken beim Verpressen aufgrund seiner bzw. ihrer hohen Wärmekapazität ein schnelles Abkühlen des erhitzten Randbereichs bewirkt bzw. bewirken, was ebenfalls eine Verkürzung der Taktzeiten zur Folge hat.

Für die Verschweißung der Plattenschichten kann es ausreichen, wenn die Innenseite(n) der Plattenschicht(en) nur bis maximal 80%, besser bis maximal 50% der Dicke der Plattenschichten aufgeschmolzen wird bzw. werden. Nach einem weiteren Merkmal der Erfindung ist vorgesehen, dass die Stege bis zu einer Tiefe von mindestens 2 cm aufgeschmolzen werden. Im Bedarfsfall kann die Tiefe auch größer sein.

Vorzugsweise sollte das Aufschmelzen ohne Vergrößerung des Abstandes der Plattenschichten durchgeführt werden. Das Aufschmelzen kann durch Einführen einer Heizquelle zwischen die Plattenschichten durchgeführt werden. Dabei schadet es nicht, wenn es zu Anhaftungen von geschmolzenem Kunststoffmaterial kommt, da dies den weiteren Gebrauch des Heizschwertes nicht behindert. Das Anhaften von geschmolzenem Kunststoffmaterial kann vollständig vermieden werden, wenn das Aufschmelzen durch Einwirkung von wärmestrahlung auf die Stirnseite beispielsweise mittels eines Infratorheizstabes oder dergleichen erfolgt.

Die Hohlkammerplatte sollte vor dem Aufschmelzen in einer bestimmten Lage fixiert werden. Dies kann beispielsweise durch Druckeinwirkung auf die Hohlkammerplatte in Richtung auf eine Unterlage geschehen oder durch andere Klemmmittel. Alternativ dazu kann die Fixierung aber auch durch Einwirkung eines Vakuums vorzugsweise von einer Unterlage her bewirkt werden. Für das Einlegen der Hohlkammerplatte in die für das Verschließen vorgesehene Vorrichtung kann die Hohlkammerplatte auf eine Unterlageplatte gegen einen Anschlag bewegt werden und nach Anlage an dem Anschlag fixiert werden. Auf diese Weise ist eine genaue Positionierung der Hohlkammerplatte in Bezug auf den bzw. die Pressbalken und den Heizbalken möglich. Nach der Fixierung kann der Anschlag entfernt werden.

Die Taktzeit einer nach dem Verfahren arbeitenden Vorrichtung kann dadurch herabgesetzt werden, dass der bzw. die Pressbalken und damit der Randbereich der Hohlkammerplatte aktiv gekühlt werden, beispielsweise mittels Durchleiten eines Kühlmittels durch den bzw. die Pressbalken.

Die zweite, sich auf die Vorrichtung zum Verschließen der Stirnseite beziehende Aufgabe wird erfindungsgemäß dadurch gelöst, dass Heiz- und Pressbalken voneinander getrennte Teile sind und die Antriebseinrichtung einen eigenen Antrieb zur Relativbewegung zwischen der in der Halterung befindlichen Hohlkammerplatte und dem Heizbalken sowie einen davon getrennten eigenen Pressbalkenantrieb aufweist und dass der Heizbalken zumindest bis unmittelbar an die Stirnseite der Hohlkammerplatte heranfahrbar ist. Mit Hilfe dieser Vorrichtung lässt sich das erfindungsgemäße Verfahren verwirklichen, das sich dadurch auszeichnet, dass die Erhitzung und die Verpressung in separaten Schritten vorgenommen wird und insbesondere die Erhitzung von der Stirnseite her erfolgt und nicht über die Oberseiten der außenliegenden Plattenschichten.

Auf die Art und Weise der Ausbildung der Heizquelle kommt es im Grunde nicht an. Die Balkenform der Heizquelle ergibt sich allein daraus, dass die Stirnseite einer Hohlkammerplatte langgestreckt ist. Dabei kann der Heizbalken als z.B. mit einer Widerstandsheizung beheiztes Heizschwert ausgebildet sein, das zwischen die Plattenschichten einer in der Halterung befindlichen Hohlkammerplatte einfahrbar ist, so dass das Aufschmelzen der Stege unmittelbar und damit die Erhitzung des Randbereichs der Hohlkammerplatte von innen her erfolgt. Anstatt oder in Kombination damit kann der Heizbalken aber auch eine Strahlungsheizung aufweisen, beispielsweise in Form eines Infrarotstabes, der für den Aufschmelzvorgang bis unmittelbar an die Stirnseite der Hohlkammerplatte herangefahren wird.

Grundsätzlich ist es unerheblich, ob bei der Relativbewegung zwischen Halterung und Heizbalken nur einer dieser beiden Teile bewegt wird oder beide Teile. Zweckmäßigerweise ist nach der Erfindung vorgesehen, dass der Antrieb als Heizbalkenantrieb ausgebildet ist, über den eine Bewegung des Heizbalkens relativ zur Halterung bewirkbar ist, wobei die Halterung dann auch gerätefest angeordnet sein kann.

Der Heizbalken ist insbesondere dann, wenn er als Heizschwert ausgebildet ist, mit einer Antiadhäsivbeschichtung, beispielsweise einer Silikonbeschichtung, versehen, um ein Anhaften von geschmolzenem Kunststoff nach Möglichkeit zu vermeiden.

Zweckmäßigerweise ist der Heizbalken linear verfahrbar geführt. Der Heizbalkenantrieb kann mehrere pneumatisch oder hydraulisch betriebene Druckzylinder über dessen Länge verteilt aufweisen, mittels denen der Heizbalken quer zu seiner Längserstreckung hin- und herbewegbar ist.

Für die Ausbildung des Pressbalkens bieten sich mehrere Lösungen an. So kann der Pressbalken in an sich bekannter Weise (vgl. EP 0 288 584 B1; DE 43 40 381 A1) als Formbalken mit einer vorzugsweise halbkreisförmigen Formnut als Pressfläche ausgebildet sein, die gegen die Stirnseite einer in der Halterung befindlichen Hohlkammerplatte bewegbar ist, also im wesentlichen in der Ebene der Hohlkammerplatte. Eine alternative Lösung besteht darin, dass ein einziger Pressbalken vorgesehen ist, der im wesentlichen quer zur Ebene einer in der Halterung befindlichen Hohlkammerplatte in Richtung auf ein gerätefestes widerlager bewegbar ist, wobei das Widerlager beispielsweise als Unterlage für die Hohlkammerplatte ausgebildet sein kann.

Statt eines einzigen Pressbalkens können aber auch zwei parallel zueinander verlaufende Pressbalken vorhanden sein, die im wesentlichen quer zur Ebene einer in der Halterung befindlichen Hohlkammerplatte bzw. einer dafür vorgesehenen Unterlage gegeneinander und voneinander weg bewegbar sind. Zwecks einer einwandfreien Führung des bzw. der Pressbalken kann jeder der Pressbalken an Schwenkarmen verschwenkbar gelagert sein. Dabei kann einer der beiden Pressbalken mittels des Pressbalkenantriebes in der Arbeitsposition an einem verstellbaren Anschlag mit einer Kraft anliegen, die größer ist als die in der Arbeitsposition wirksame Kraft des anderen Pressbalkens. Durch Einstellen des Anschlages kann die gewünschte Fügeebene genau und reproduzierbar eingestellt werden.

Der Pressbalkenantrieb kann in ähnlicher Weise wie der Heizbalkenantrieb ausgebildet sein, indem er über die Länge des bzw. der Pressbalken verteilt mehrere pneumatische oder hydraulische Druckzylinder aufweist, mittels denen der jeweilige Pressbalken bewegbar ist.

Nach der Erfindung ist ferner vorgeschlagen, der bzw. die Pressbalken wenigstens einen Kühlkanal für das Durchleiten eines Kühlmediums, beispielsweise einer Kühlflüssigkeit, aufweist, um den bzw. die Pressbalken aktiv zu kühlen und hierdurch ein schnelles Abkühlen und Erstarren der zuvor aufgeschmolzenen Teile des Randbereichs zu bewirken und damit die Taktzeit noch weiter zu verkürzen. Nach einem weiteren Merkmal der Erfindung ist vorgesehen, dass der Halterung eine Anschlageinrichtung mit zumindest einem Anschlagelement zugeordnet ist, gegen den die Stirnseite einer in der Halterung befindlichen Hohlkammerplatte anlegbar ist. Die Anschlageinrichtung kann einen mit dem Anschlagelement verbundenen Anschlagantrieb aufweisen, mittels dem das Anschlagelement zwischen einer Anschlagstellung und einer Ruhestellung hin- und herbewegbar ist, wobei das Anschlagelement in der Ruhestellung außerhalb des Bewegungsbereichs des Heizschwertes befindlich ist. Das Anschlagelement kann beispielsweise linear und schräg zur Bewegungsrichtung des Heizbalkens beweglich geführt sein.

Die Halterung kann beispielsweise als Auflage für die einseitige Anlage der Hohlkammerplatte ausgebildet sein, wobei sie sich zweckmäßigerweise im wesentlichen horizontal erstreckt. Die Anschlageinrichtung sollte dann im Bereich des heizschwertseitigen Endes der Auflage angeordnet sein. was den Heizbalken betrifft, ist es zweckmäßig, dass er parallel zur Ebene der Auflage und in Richtung auf diese und von ihr weg bewegbar ist. Der bzw. die Pressbalken sollten im Bereich des heizschwerseitigen Endes der Auflage angeordnet und im wesentlichen senkrecht zur Ebene der Auflage bewegbar sein.

Die Halterung bzw. in Sonderheit die Auflage sollte eine Fixiereinrichtung aufweisen, mittels der die Hohlkammerplatte in einer vorgesehenen Stellung an der Halterung fixierbar ist. Die Fixiereinrichtung kann beispielsweise eine Klemmeinrichtung aufweisen, die hier zweckmäßigerweise mit einem entsprechenden Klemmantrieb ausgestattet ist. Sie kann jedoch auch eine Vakuumeinrichtung aufweisen, über die die Hohlkammerplatte auf eine Unterlage angesaugt wird.

Nach einem weiteren erfindungsgemäßen Vorschlag sollten die Position des Heizbalkens und/oder des bzw. der Pressbalken einstellbar in der weise sein, dass sie jeweils quer zu ihren Längserstreckungen und quer zu ihren Bewegungsrichtungen verstellbar sind. Auf diese weise lassen sich Heizbalken und/oder Pressbalken in weiten Bereichen an die jeweilige Dicke der Hohlkammerplatte anpassen, so dass der Heizbalken in der Mittenebene der Hohlkammerplatte auf deren Stirnseite hin bewegt werden und in der Ausbildung als Heizschwert mittig in die Hohlkammerplatte eingefahren und der bzw. die Pressbalken an die jeweilige Dicke der Hohlkammerplatte angepasst werden kann. Alternativ dazu oder in Kombination damit kann aber auch die Auflageebene der Halterung quer zu der Auflagenebene einstellbar sein, um hierüber eine Anpassung an unterschiedliche Plattendicken vornehmen zu können.

In der Zeichnung ist die Erfindung anhand eines Ausführungsbeispiels näher veranschaulicht. Es zeigen:
- Figur 1: die Vorrichtung zum Verschließen der Stirnseite einer Hohlkammerplatte von der Beschickungsseite her schräg von oben und mit abgenommener Abdeckhaube;
- Figur 2: die Vorrichtung gemäß Figur 1 von der der Beschickungsseite abgewandten Seite in der Ansicht schräg von oben;
- Figur 3: einen Querschnitt durch den oberen Bereich der Vorrichtung gemäß den Figuren 1 und 2.

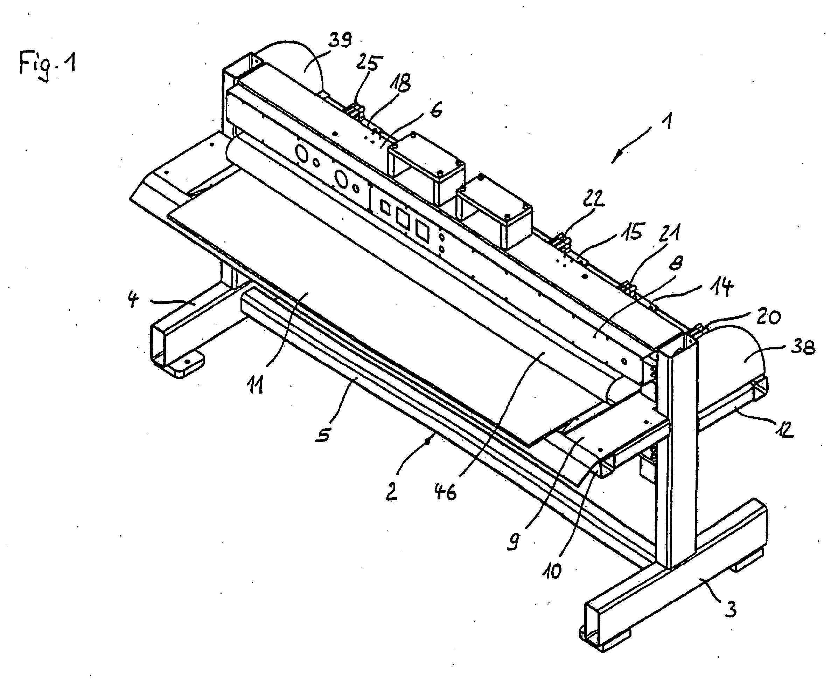

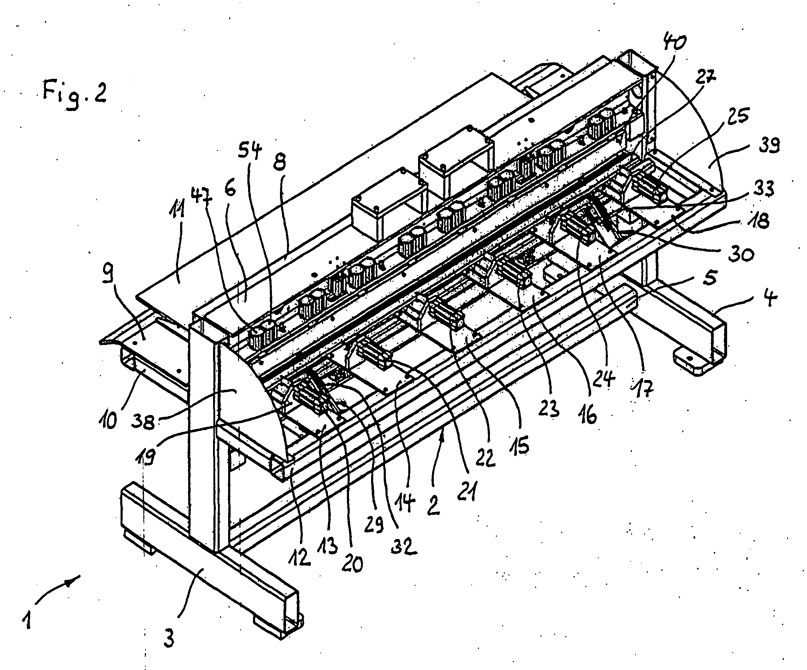

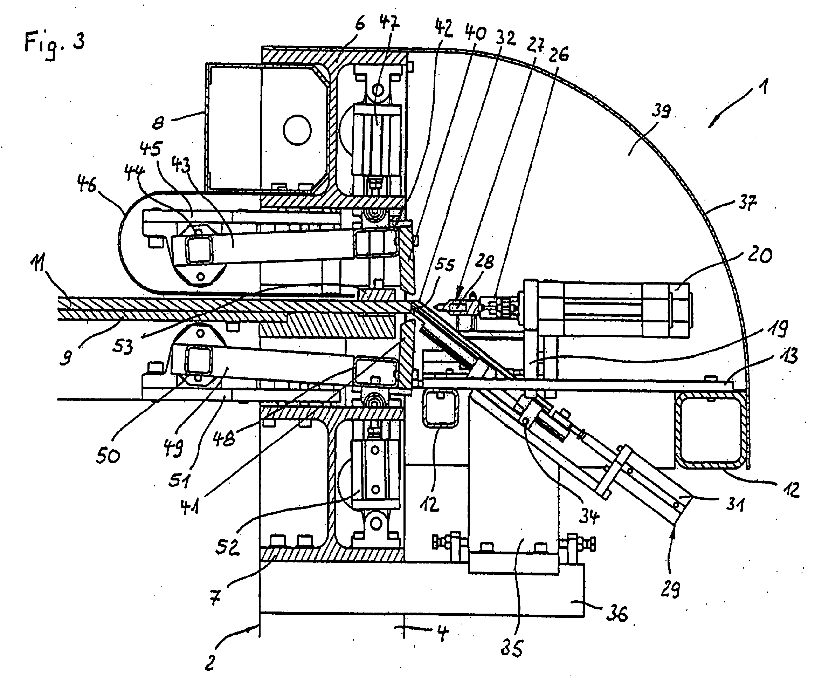

Wie insbesondere aus den Figuren 1 und 2 zu sehen ist, hat die Vorrichtung 1 einen Maschinenrahmen 2 mit zwei außenseitigen, die Form eines umgedrehten T aufweisenden Ständern 3, 4, die untenseitig über eine horizontale Längsstrebe 5 miteinander verbunden sind. Die oberen Enden der Ständer 3, 4 sind mittels zweier sich ebenfalls horizontal erstreckender Doppel-T-Träger 6, 7 verbunden, die übereinander angeordnet sind (vgl. Figur 3).

In den oberen Doppel-T-Träger 6 ist auf der Beschickungsseite ein Kabelkanalgehäuse 8 teilweise eingelassen, das beschickungsseitig Öffnungen für Armaturen, Schalter etc. aufweist. Auf der Beschickungsseite erstreckt sich horizontal eine Auflageplatte 9, die auf einem mit den Ständern 3, 4 verbundenen Plattenrahmen 10 untenseitig und höhenverstellbar abgestützt wird. Auf der Auflageplatte 9 ruht eine Hohlkammerplatte 11.

Auf der der Beschickungsseite abgewandten Seite (Figur 2) ist an den Ständern 3, 4 ein rechteckiger Halterahmen 12 angebracht. Der Halterahmen 12 bildet eine Stütze für insgesamt sechs Platten 13-18, die nebeneinander im Abstand angeordnet sind und an denen über senkrecht hochstehende Montageplatten - beispielhaft mit 19 bezeichnet - jeweils ein Pneumatikzylinder 20-25 befestigt ist. Die Pneumatikzylinder 20-25 stehen über jeweils eine thermisch trennende Kupplung - beispielhaft mit 26 bezeichnet - mit einem Heizschwert 27 in Verbindung, das gegenüber dem Ende der Auflageplatte 9 angeordnet ist und sich quer über nahezu den gesamten Abstand zwischen den beiden Ständern 3, 4 erstreckt.

Da die Pneumatikzylinder 20-25 horizontal angeordnet sind, ist das Heizschwert 27 quer zu seiner Längserstrekkung aus der in Figur 3 dargestellten Ruhestellung in Richtung auf die Auflageplatte 9 verschiebbar. Das Heizschwert 27 ist an seiner freien Kante keilförmig zugespitzt und weist einen Hohlkanal 28 auf, in dem - nicht näher dargestellt - eine Widerstandsheizung angeordnet ist, mittels der das Heizschwert 27 auf eine Temperatur von mehreren hundert Grad Celsius erhitzbar ist.

Zwischen den jeweils beiden äußeren Pneumatikzylindern 20, 21 bzw. 24, 25 ist jeweils eine Anschlageinrichtung 29, 30 angeordnet. Die Anschlageinrichtungen 29, 30 erstrecken sich in Richtung auf die Auflageplatte 9 schräg nach oben. Sie weisen jeweils einen Pneumatikzylinder 31 auf, dessen Kolbenstange mit einem Anschlagschieber 32, 33 verbunden ist, die linear in einer Schieberführung 34 geführt sind. Die Anschlageinrichtungen 29, 30 sind jeweils auf einer Stützplatte 35 angeordnet, die jeweils auf einem Träger 36 ruht, der an dem unteren Doppel-T-Träger 7 befestigt ist. Oberhalb der Pneumatikzylinder 20-25 befindet sich eine halbkreisförmig gewölbte Abdeckhaube 37, die sich von der Oberseite des oberen Doppel-T-Trägers 6 bis zu dem Halterahmen 12 erstreckt und seitlich jeweils eine Abdeckscheibe 38, 39 aufweist. Der gebogene Teil der Abdeckhaube 37 ist in den Figuren 1 und 2 weggelassen.

Benachbart des heizschwertseitigen Endes der Auflageplatte 9 erstrecken sich oberhalb und unterhalb deren Ebene je ein Pressbalken 40, 41. Die Pressbalken 40, 41 stehen sich mit ihren keilartig geformten Pressflächen stirnseitig gegenüber.

Der obere Pressbalken 40 ist an einem Horizontalrohr 42 befestigt, das über zwei im Abstand zueinander angeordnete Schwenkhebel, von denen hier nur der eine Schwenkhebel 43 zu sehen ist, mit einer Lagerung 44 verbunden ist. Die Lagerung 44 ist unterhalb einer Halterungsstrebe 45 befestigt, die wiederum an der Unterseite des oberen Doppel-T-Trägers 6 angebracht ist. Die Lagerung 44 hat eine sich horizontal erstreckende Schwenkachse, um die die Schwenkhebel 43 und damit das Horizontalrohr 42 mit dem Pressbalken 40 vertikal verschwenkbar sind. Die Schwenkhebel 43 und die Lagerung 44 mit der Halterungsstrebe 45 sind durch ein von dem Kabelkanalgehäuse 8 ausgehendes und um sie herum gebogenes Abdeckblech 46 gekapselt, dessen untenseitiger Schenkel parallel zur Auflageplatte 9 verläuft und damit als Einführhilfe für die Hohlkammerplatte 11 dient.

Das Horizontalrohr 42 ist obenseitig mit insgesamt acht Pneumatikzylindern - beispielhaft mit 47 bezeichnet - verbunden, die innerhalb des oberen Doppel-T-Trägers 6 vertikal angeordnet sind. Über die Pneumatikzylinder 47 können das Horizontalrohr 42 und damit der Pressbalken 40 angehoben und abgesenkt werden.

Der untere Pressbalken 41 ist analog gelagert, d.h. auch er ist an einem Horizontalrohr 48 befestigt, das mit Schwenkhebeln 49 verbunden ist, welche zu einer Lagerung 50 gehen. Die Lagerung 50 ist über Halterungsstreben 51 an der Oberseite des unteren Doppel-T-Trägers 7 befestigt. Die Unterseite des Horizontalrohrs 48 ist mit acht innerhalb des unteren Doppel-T-Trägers 7 angeordneten Pneumatikzylindern 52 verbunden, die senkrecht hochstehen und über deren Kolbenstangen das Horizontalrohr 48 und damit der untere Pressbalken 41 um eine horizontale, durch die Lagerung 50 gehende Schwenkachse verschwenkt werden können. Die Pneumatikzylinder 52 sind in der gleichen Verteilung angeordnet wie die in Figur 2 sichtbaren Pneumatikzylinder 47.

Am heizschwertseitigen Ende der Auflageplatte 9 ist oberhalb von ihr eine Klemmleiste 53 angeordnet, die über die Breite der Vorrichtung 1 sich erstreckt. Ihre Oberseite ist mit acht Pneumatikzylindern - beispielhaft mit 54 bezeichnet - verbunden, wobei jeweils ein Pneumatikzylinder 47 für den oberen Pressbalken 40 und ein Pneumatikzylinder 54 für die Klemmleiste 53 paarweise angeordnet sind, wie aus Figur 2 zu ersehen ist. Durch entsprechende Aktivierung der Pneumatikzylinder 54 kann die Klemmleiste 53 angehoben oder abgesenkt werden.

In der Darstellung ist zu sehen, dass die Hohlkammerplatte 11 auf der Auflageplatte 9 so weit in die Vorrichtung 1 eingeschoben ist, dass sie mit ihrer Stirnseite 55 gegen die freien Enden der Anschlagschieber 32, 33 anliegt. Hierzu sind die Anschlagschieber 32, 33 in ihre vorgesehene Anschlagstellung ausgefahren, so dass sie etwa bis zur Hälfte in den Zwischenraum zwischen den Pressbalken 40, 41 hineinragen. Da die Auflageplatte 9 vor den Pressbalken 40, 41 endet, steht die Hohlkammerplatte 11 bis in den Raum zwischen den beiden Pressbalken 40, 41 über die Auflageplatte 9 vor. Sie ist über die mittels der Pneumatikzylinder 54 abgesenkte Klemmleiste 53 zwischen dieser und der Auflageplatte 9 verklemmt und damit in ihrer gezeigten Position fixiert.

Mit dem nachfolgenden Prozess soll die offene Stirnseite 55 der Hohlkammerplatte 11 geschlossen werden. Hierzu werden zunächst die Anschlagschieber 32, 33 durch entsprechende Ansteuerung der Pneumatikzylinder 31 schräg nach unten in ihre Ruhestellung zurückgefahren, so dass sie nicht mehr im Bewegungsbereich des Heizschwertes 27 liegen. Dann werden die Pneumatikzylinder 20-25 dergestalt angesteuert, dass das Heizschwert 27 horizontal in Richtung auf die Stirnseite 55 der Hohlkammerplatte 11 verfährt und mit der keilförmigen Spitze über die Stirnseite 55 in den Hohlraum zwischen den Plattenschichten der Hohlkammerplatte 11 einfährt. In diesem Randbereich der Hohlkammerplatte 11 werden hierdurch die Stege und die Innenseiten der außenliegenden Plattenschichten aufgeschmolzen, ohne dass die Hohlkammerplatte 11 aufgeweitet wird. Dabei werden die Innenseiten der Plattenschichten so weit plastifiziert, dass sie schweißtechnisch miteinander verbunden werden können.

Nach ausreichender Erhitzung wird das Heizschwert 27 durch entsprechende Ansteuerung der Pneumatikzylinder 20-25 wieder in die gezeigte Ruheposition zurückgefahren.

Unmittelbar anschließend werden die Pressbalken 40, 41 durch Ansteuerung der Pneumatikzylinder 47 bzw. 52 gegeneinander verschwenkt, so dass sie in Anlage an die Außenseiten der Plattenschichten im Randbereich der Hohlkammerplatte 11 kommen und sie dort entsprechend der Formgebung der Pressflächen der Pressbacken 40, 41 die Plattenschichten so weit zusammendrücken, dass sie an ihren Enden miteinander verschweißen und somit den Hohlraum innerhalb der Hohlkammerplatte 11 abdichten. Dabei ist die Kraft, mit der der untere Pressbalken 41 nach oben gedrückt wird, höher als die Kraft, mit der der obere Pressbalken 40 nach unten bewegt wird. Die Endstellung (Arbeitsposition) des unteren Pressbalkens 41 ist mittels eines hier nicht dargestellten, jedoch einstellbaren Anschlages so bestimmbar, dass eine gewünschte Fügeebene erhalten wird. Ebenfalls einstellbar ist der Druck, mit der die Pressbacken 40, 41 abgesenkt bzw. angehoben werden, um eine optimale Anpassung an die jeweilige Struktur und das jeweilige Material der Hohlkammerplatte 11 vornehmen zu können.

Nach hinreichendem Erkalten des Randbereichs der Hohlkammerplatte 11 werden die Pressbalken 40, 41 wieder in die gezeigten Ruhepositionen zurückgefahren. Nach Anheben der Klemmleiste 53 durch Aktivierung der Pneumatikzylinder 54 kann die Hohlkammerplatte 11 aus der Vorrichtung 1 herausgenommen werden. Für den Verschluss einer anderen Stirnseite der Hohlkammerplatte 11 kann diese entsprechend gedreht und wieder in die Vorrichtung 1 eingeschoben werden, wobei zuvor die Anschlagschieber 32, 33 wieder in die gezeigte Anschlagposition verfahren werden.

## Patentansprüche

1. Verfahren zum Verschließen der Stirnseite (55) einer Hohlkammerplatte (11), die zwei außenliegende Plattenschichten mit dazwischen angeordneten Stegen aufweist, wobei die Hohlkammerplatte (11) im Randbereich aufgeschmolzen wird, bevor die Plattenschichten dort unter Bildung einer Schweißverbindung zusammengedrückt werden, **dadurch gekennzeichnet, dass** die Stege sowie die Innenseite zumindest einer der Plattenschichten im Randbereich durch Hitzebeaufschlagung ausschließlich von der Stirnseite (55) und/oder von innen her nur so weit aufgeschmolzen werden, dass die Außenseiten der Plattenschichten keine Schmelztemperatur erreichen.

2. Verfahren nach Anspruch 1, **dadurch gekennzeichnet, dass** die Innenseiten beider Plattenschichten aufgeschmolzen werden.

3. Verfahren nach Anspruch 1 oder 2, **dadurch gekennzeichnet, dass** die Innenseite(n) der Plattenschicht(en) nur bis zu maximal 80% der Dicke der Plattenschichten aufgeschmolzen wird bzw. werden.

4. Verfahren nach einem der Ansprüche 1 bis 3, **dadurch gekennzeichnet, dass** die Stege bis zu einer Tiefe von mindestens 2 cm aufgeschmolzen werden.

5. Verfahren nach einem der Ansprüche 1 bis 4, **dadurch gekennzeichnet, dass** das Aufschmelzen ohne Vergrößerung des Abstandes der Plattenschichten durchgeführt wird.

6. Verfahren nach einem der Ansprüche 1 bis 5, **dadurch gekennzeichnet, dass** das Aufschmelzen durch Einführen einer Heizquelle zwischen die Plattenschichten durchgeführt wird.

7. Verfahren nach einem der Ansprüche 1 bis 5, **dadurch gekennzeichnet, dass** das Aufschmelzen durch Einwirken von Wärmestrahlung auf die Stirnseite der Hohlkammerplatte (11) durchgeführt wird.

8. Verfahren nach einem der Ansprüche 1 bis 7, **dadurch gekennzeichnet, dass** die Hohlkammerplatte (11) vor dem Aufschmelzen fixiert wird.

9. Verfahren nach Anspruch 8, **dadurch gekennzeichnet, dass** die Fixierung durch Druckeinwirkung auf die Hohlkammerplatte (11) in Richtung auf eine Unterlage (9) geschieht.

10. Verfahren nach einem der Ansprüche 1 bis 9, **dadurch gekennzeichnet, dass** die Fixierung durch Einwirken eines Vakuums auf die Hohlkammerplatte (11) von einer Unterlage (9) her bewirkt wird.

11. Verfahren nach einem der Ansprüche 1 bis 10, **dadurch gekennzeichnet, dass** die Hohlkammerplatte (11) auf eine Unterlageplatte (9) gegen einen Anschlag (32, 33) bewegt wird und nach Anlage an dem Anschlag (32, 33) fixiert wird.

12. Verfahren nach Anspruch 11, **dadurch gekennzeichnet, dass** der Anschlag bzw. die Anschläge (32, 33) nach der Fixierung entfernt wird bzw. werden.

13. Verfahren nach einem der Ansprüche 1 bis 12, **dadurch gekennzeichnet, dass** der Randbereich der Hohlkammerplatte (11) beim Zusammendrücken gekühlt wird.

14. Vorrichtung (1) zum Verschließen der Stirnseite (55) einer Hohlkammerplatte (11) mit zwei außenliegenden Plattenschichten und dazwischen angeordneten Stegen, wobei die Vorrichtung (1) eine Halterung (9) für die Hohlkammerplatte (11) sowie einen Heizbalken (27) zum Aufschmelzen eines Randbereichs der Hohlkammerplatte (11) und einen Pressbalken (40, 41) zum Zusammenpressen der Plattenschichten im Randbereich aufweist und wobei eine Antriebseinrichtung vorhanden ist, über die die Heiz- und Pressbalken (27; 40, 41) zwischen einer Ruheposition und einer Arbeitsposition quer zu ihrer Längserstreckung hin-und herbewegbar sind, **dadurch gekennzeichnet, dass** Heiz-und Pressbalken (27; 40, 41) voneinander getrennte Teile sind und die Antriebseinrichtungen einen eigenen Antrieb (20-25) zur Relativbewegung zwischen der in der Halterung (9) befindlichen Hohlkammerplatte (11) und dem Heizbalken (27) sowie einen davon getrennten eigenen Pressbalkenantrieb (47, 52) aufweist und dass der Heizbalken zumindest bis unmittelbar an die Stirnseite (55) der Hohlkammerplatte (11) heranfahrbar ist.

15. Vorrichtung nach Anspruch 14, **dadurch gekennzeichnet, dass** der Heizbalken als beheiztes Heizschwert ausgebildet ist, das zwischen die Plattenschichten einer in der Halterung (9) befindlichen Hohlkammerplatte (11) einfahrbar ist.

16. Vorrichtung nach Anspruch 14 oder 15, **dadurch gekennzeichnet, dass** der Heizbalken eine Strahlungsheizung aufweist.

17. Vorrichtung nach einem der Ansprüche 14 bis 16, **dadurch gekennzeichnet, dass** der Antrieb als Heizbalkenantrieb (20-25) ausgebildet ist, über den eine Bewegung des Heizbalkens (27) relativ zur Halterung (9) bewirkbar ist.

18. Vorrichtung nach einem der Ansprüche 14 bis 17, **dadurch gekennzeichnet, dass** der Heizbalken (27) mit einer Antiadhäsivbeschichtung versehen ist.

19. Vorrichtung nach einem der Ansprüche 14 bis 18, **dadurch gekennzeichnet, dass** der Heizbalken (27) linear verfahrbar geführt ist.

20. Vorrichtung nach einem der Ansprüche 14 bis 19, **dadurch gekennzeichnet, dass** der Heizbalkenantrieb über dessen Länge verteilt mehrere Druckzylinder (20-25) aufweist, mittels denen der Heizbalken (27) bewegbar ist.

21. Vorrichtung nach einem der Ansprüche 14 bis 20, **dadurch gekennzeichnet, dass** der Pressbalken als Formbalken mit einer Formnut als Pressfläche ausgebildet ist, die gegen den Rand einer in der Halterung befindlichen Hohlkammerplatte bewegbar ist.

22. Vorrichtung nach einem der Ansprüche 14 bis 20, **dadurch gekennzeichnet, dass** ein einziger Pressbalken vorgesehen ist, der im wesentlichen quer zur Ebene einer in der Halterung befindlichen Hohlkammerplatte in Richtung auf ein gerätefestes Widerlager bewegbar ist.

23. Vorrichtung nach einem der Ansprüche 14 bis 20, **dadurch gekennzeichnet, dass** zwei parallel zueinander verlaufende Pressbalken (40, 41) vorhanden sind, die im wesentlichen quer zur Ebene einer in der Halterung (9) befindlichen Hohlkammerplatte (11) gegeneinander und voneinander weg bewegbar sind.

24. Vorrichtung nach Anspruch 23, **dadurch gekennzeichnet, dass** einer der beiden Pressbalken (40, 41) mittels des Pressbalkenantriebes in der Arbeitsposition an einem verstellbaren Anschlag mit einer Kraft anliegt, die größer ist als die in der Arbeitsposition wirksame Kraft des anderen Pressbalkens (40).

25. Vorrichtung nach einem der Ansprüche 14 bis 24, **dadurch gekennzeichnet, dass** der bzw. die Pressbalken (40, 41) an Schwenkarmen (43, 49) verschwenkbar gelagert ist bzw. sind.

26. Vorrichtung nach einem der Ansprüche 14 bis 25, **dadurch gekennzeichnet, dass** der Pressbalkenantrieb über die Länge des bzw. der Pressbalken (40, 41) verteilt mehrere Druckzylinder (47, 52) aufweist, mittels denen der jeweilige Pressbalken (40, 41) bewegbar ist.

27. Vorrichtung nach einem der Ansprüche 14 bis 26, **dadurch gekennzeichnet, dass** der bzw. die Pressbalken (40, 41) wenigstens einen Kühlkanal für das Hindurchleiten eines Kühlmediums aufweisen.

28. Vorrichtung nach einem der Ansprüche 14 bis 27, **dadurch gekennzeichnet, dass** der Halterung (9) eine Anschlageinrichtung (29, 30) mit zumindest einem Anschlagelement (32, 33) zugeordnet ist, gegen das die Stirnseite (55) einer in der Halterung (9) befindlichen Hohlkammerplatte (11) anlegbar ist.

29. Vorrichtung nach Anspruch 28, **dadurch gekennzeichnet, dass** die Anschlageinrichtung (29, 30) einen mit dem Anschlagelement (32, 33) verbundenen Anschlagantrieb (31) aufweist, mittels dem das bzw. die Anschlagelement(e) zwischen einer Anschlagstellung und einer Ruhestellung hin- und herbewegbar ist, wobei das bzw. die Anschlagelement(e) (32, 33) in der Ruhestellung außerhalb des Bewegungsbereichs des Heizbalkens (27) befindlich ist bzw. sind.

30. Vorrichtung nach Anspruch 29, **dadurch gekennzeichnet, dass** das bzw. die Anschlagelement(e) (32, 33) linear und schräg zur Bewegungsrichtung des Heizbalkens (27) beweglich geführt ist.

31. Vorrichtung nach einem der Ansprüche 14 bis 30, **dadurch gekennzeichnet, dass** die Halterung als Auflage (9) für die einseitige Anlage der Hohlkammerplatte (11) ausgebildet ist.

32. Vorrichtung nach Anspruch 31, **dadurch gekennzeichnet, dass** die Auflage (9) eine im wesentlichen horizontale Erstreckung hat.

33. Vorrichtung nach einem der Ansprüche 28 bis 32 und 33, **dadurch gekennzeichnet, dass** die Anschlageinrichtung (29, 30) im Bereich eines heizschwertseitigen Endes der Auflage (9) angeordnet ist.

34. Vorrichtung nach einem der Ansprüche 31 bis 33, **dadurch gekennzeichnet, dass** der Heizbalken (27) parallel zur Ebene der Auflage (9) und in Richtung auf diese und von ihr weg bewegbar ist.

35. Vorrichtung nach einem der Ansprüche 31 bis 34, **dadurch gekennzeichnet, dass** der bzw. die Pressbalken (40, 41) im Bereich des heizschwertseitigen Endes der Auflage (9) angeordnet und senkrecht zur Ebene der Auflage (9) bewegbar ist bzw. sind.

36. Vorrichtung nach einem der Ansprüche 14 bis 35, **dadurch gekennzeichnet, dass** die Halterung (9) eine Fixiereinrichtung (53, 54) aufweist, mittels der die Hohlkammerplatte (11) in einer vorgesehenen Stellung an der Halterung (9) fixierbar ist.

37. Vorrichtung nach Anspruch 36, **dadurch gekennzeichnet, dass** die Fixiereinrichtung eine Klemmeinrichtung (53, 54) aufweist.

38. Vorrichtung nach Anspruch 36, **dadurch gekennzeichnet, dass** die Fixiereinrichtung eine Vakuumeinrichtung aufweist.

39. Vorrichtung nach einem der Ansprüche 14 bis 38, **dadurch gekennzeichnet, dass** der Heizbalken (27) quer zu seiner Längserstreckung und zu seiner Bewegungsrichtung verstellbar ist.

40. Vorrichtung nach einem der Ansprüche 14 bis 39, **dadurch gekennzeichnet, dass** die Halterung (9) quer zur Auflagefläche für die Hohlkammerplatte (11) verstellbar ist.

41. Vorrichtung nach einem der Ansprüche 14 bis 40, **dadurch gekennzeichnet, dass** der bzw. die Pressbalken (40, 41) quer zu der Längserstreckung und der Bewegungsrichtung hinsichtlich seiner bzw. ihrer Ruhestellung und/oder Arbeitsstellung verstellbar ist bzw. sind.

## Claims

1. Method of sealing the end face (55) of a twin-wall sheet (11) having two outer sheet layers with walls arranged therebetween, the twin-wall sheet (11) being melted in the edge region before the sheet layers are compressed in that region with the formation of a welded joint, **characterised in that** the walls and the inner face of at least one of the sheet layers are melted in the edge region by the application of heat exclusively from the end face (55) and/or from the inside, but only to a limited extent, such that the outer faces of the sheet layers do not reach melting temperature.

2. Method according to claim 1, **characterised in that** the inner faces of the two sheet layers are melted.

3. Method according to claim 1 or claim 2, **characterised in that** the inner face(s) of the sheet layer(s) is/are melted only to a maximum of 80 % of the thickness of the sheet layers.

4. Method according to one of claims 1 to 3, **characterised in that** the walls are melted to a depth of at least 2 cm.

5. Method according to one of claims 1 to 4, **characterised in that** the melting is carried out without increasing the spacing of the sheet layers.

6. Method according to one of claims 1 to 5, **characterised in that** the melting is carried out by introducing a heat source between the sheet layers.

7. Method according to one of claims 1 to 5, **characterised in that** the melting is carried out by applying heat radiation to the end face of the twin-wall sheet (11).

8. Method according to one of claims 1 to 7, **characterised in that** the twin-wall sheet (11) is fixed before the melting operation.

9. Method according to claim 8, **characterised in that** the fixing is carried out by applying pressure to the twin-wall sheet (11) in the direction of a base (9).

10. Method according to one of claims 1 to 9, **characterised in that** the fixing is effected by applying a vacuum to the twin-wall sheet (11) from a base (9).

11. Method according to one of claims 1 to 10, **characterised in that** the twin-wall sheet (11) is moved on to a base plate (9) towards a stop (32, 33) and is fixed once it bears against the stop (32, 33).

12. Method according to claim 11, **characterised in that** the stop or stops (32, 33) is/are removed after the fixing operation.

13. Method according to one of claims 1 to 12, **characterised in that** the edge region of the twin-wall sheet (11) is cooled during the compression operation.

14. Device (1) for sealing the end face (55) of a twin-wall sheet (11) having two outer sheet layers and walls arranged therebetween, the device (1) having a holder (9) for the twin-wall sheet (11), as well as a heated bar (27) for melting an edge region of the twin-wall sheet (11) and a pressing bar (40, 41) for compressing the sheet layers in the edge region and a drive device is provided, by means of which the heated bar and pressing bar (27; 40, 41) can be moved to and fro between a rest position and a working position transversely to their longitudinal extent, **characterised in that** the heated bar and pressing bar (27; 40, 41) are independent components and the drive device has a separate drive (20-25) for the relative movement between the twin-wall sheet (11) situated in the holder (9) and the heated bar (27) and a separate pressing-bar drive (47, 52) and that the heated bar can be moved at least right up to the end face (55) of the twin-wall sheet (11).

15. Device according to claim 14, **characterised in that** the heated bar is designed as a heated electrode bar which can be introduced between the sheet layers of a twin-wall sheet (11) situated in the holder (9).

16. Device according to claim 14 or claim 15, **characterised in that** the heated bar has radiation heating.

17. Device according to one of claims 14 to 16, **characterised in that** the drive is designed as a heated-bar drive (20-25) by means of which the heated bar (27) can be moved relative to the holder (9).

18. Device according to one of claims 14 to 17, **characterised in that** the heated bar (27) is provided with a non-stick coating.

19. Device according to one of claims 14 to 18, **characterised in that** the heated bar (27) is guided in a linearly movable manner.

20. Device according to one of claims 14 to 19, **characterised in that** the heated-bar drive has a plurality of pressure cylinders (20-25) distributed over its length, by means of which the heated bar (27) can be moved.

21. Device according to one of claims 14 to 20, **characterised in that** the pressing bar is designed as a forming bar with a forming groove serving as the pressing surface which can be moved towards the edge of a twin-wall sheet situated in the holder.

22. Device according to one of claims 14 to 20, **characterised by** one single pressing bar which can be moved in the direction of a support fixed to the device essentially transversely to the plane of a twin-wall sheet situated in the holder.

23. Device according to one of claims 14 to 20, **characterised by** two pressing bars (40, 41) extending parallel to one another which can be moved towards and away from one another essentially transversely to the plane of a twin-wall sheet (11) situated in the holder (9).

24. Device according to claim 23, **characterised in that** one of the two pressing bars (40, 41) bears against an adjustable stop in the working position by means of the pressing-bar drive with a force which is greater than the force of the other pressing bar (40) effective in the working position.

25. Device according to one of claims 14 to 24, **characterised in that** the pressing bar or bars (40, 41) is/are mounted to pivot on pivot arms (43, 49).

26. Device according to one of claims 14 to 25, **characterised in that** the pressing-bar drive has a plurality of pressure cylinders (47, 52) distributed over the length of the pressing bar or bars (40, 41), by means of which the respective pressing bar (40, 41) can be moved,

27. Device according to one of claims 14 to 26, **characterised in that** the pressing bar or bars (40, 41) has/have at least one cooling duct for the passage of a coolant.

28. Device according to one of claims 14 to 27, **characterised in that** a stop device (29, 30) is associated with the holder (9) and has at least one stop element (32, 33) against which the end face (55) of a twin-wall sheet (11) situated in the holder (9) can be brought to bear.

29. Device according to claim 28, **characterised in that** the stop device (29, 30) has a stop drive (31) connected to the stop element (32, 33), by means of which the stop element or elements can be moved to and fro between a stop position and a rest position, the stop element or elements (32, 33) being situated outside the range of motion of the heated bar (27) in the rest position.

30. Device according to claim 29, **characterised in that** the stop element or elements (32, 33) are movably guided linearly and at an incline relative to the direction of movement of the heated bar (27).

31. Device according to one of claims 14 to 30, **characterised in that** the holder is designed as a support (9) against which one side of the twin-wall sheet (11) can be brought to bear.

32. Device according to claim 31, **characterised in that** the support (9) extends essentially horizontally.

33. Device according to one of claims 28 to 32 and 33, **characterised in that** the stop device (29, 30) is arranged in the region of an electrode-bar end of the support (9).

34. Device according to one of claims 31 to 33, **characterised in that** the heated bar (27) is movable parallel to the plane of the support (9) and towards and away from the latter.

35. Device according to one of claims 31 to 34, **characterised in that** the pressing bar or bars (40, 41) is/are arranged in the region of the electrode-bar end of the support (9) and is/are movable perpendicularly to the plane of the support (9).

36. Device according to one of claims 14 to 35, **characterised in that** the holder (9) has a fixing device (53, 54) by means of which the twin-wall sheet (11) can be fixed to the holder (9) in a specified position.

37. Device according to claim 36, **characterised in that** the fixing device has a clamping device (53, 54).

38. Device according to claim 36, **characterised in that** the fixing device has a vacuum device.

39. Device according to one of claims 14 to 38, **characterised in that** the heated bar (27) is adjustable transversely to its longitudinal extent and to its direction of movement.

40. Device according to one of claims 14 to 39, **characterised in that** the holder (9) is adjustable transversely to the supporting surface for the twin-wall sheet (11).

41. Device according to one of claims 14 to 40, **characterised in that** the pressing bar or bars (40, 41) is/are adjustable transversely to the longitudinal extent and to the direction of movement with respect to its/their rest position and/or working position.

## Revendications

1. Procédé pour fermer le côté frontal (55) d'un panneau creux (11) qui présente deux couches extérieures de panneau avec des entretoises intermédiaires, sachant qu'on fond le panneau creux (11) dans la région de bord, avant que les couches du panneau y soient comprimées en formant une liaison soudée, **caractérisé en ce qu'**on fond les entretoises ainsi que le côté intérieur d'au moins une des couches du panneau dans la région de bord par sollicitation thermique, exclusivement depuis le côté frontal (55) et/ou depuis l'intérieur, seulement dans une mesure telle que les côtés extérieurs des couches du panneau n'atteignent pas la température de fusion.

2. Procédé selon la revendication 1, **caractérisé en ce qu'**on fond les côtés intérieurs des deux couches du panneau.

3. Procédé selon la revendication 1 ou 2, **caractérisé en ce qu'**on fond le ou les côtés intérieurs de la ou des couches du panneau seulement jusqu'à au plus 80% de l'épaisseur des couches du panneau.

4. Procédé selon l'une des revendications 1 à 3, **caractérisé en ce qu'**on fond les entretoises jusqu'à une profondeur d'au moins 2 cm.

5. Procédé selon l'une des revendications 1 à 4, **caractérisé en ce que** la fusion s'effectue sans augmentation d'espacement des couches du panneau.

6. Procédé selon l'une des revendications 1 à 5, **caractérisé en ce que** la fusion s'effectue en introduisant une source de chauffage entre les couches du panneau.

7. Procédé selon l'une des revendications 1 à 5, **caractérisé en ce que** la fusion s'effectue par action d'un rayonnement thermique sur le côté frontal du panneau creux (11).

8. Procédé selon l'une des revendications 1 à 7, **caractérisé en ce que** le panneau creux (11) est immobilisé ou fixé avant la fusion.

9. Procédé selon la revendication 8, **caractérisé en ce que** l'immobilisation ou fixation s'effectue en exerçant une pression sur le panneau creux (11) en direction d'une surface d'appui ou support (9).

10. Procédé selon l'une des revendications 1 à 9, **caractérisé en ce que** l'immobilisation ou fixation est produite en exerçant un vide sur le panneau creux (11) depuis une surface d'appui ou support (9).

11. Procédé selon l'une des revendications 1 à 10, **caractérisé en ce que** le panneau creux (11) est déplacé sur une plaque d'appui ou support (9) vers une butée (32, 33), et est immobilisé ou fixé après application contre la butée (32, 33).

12. Procédé selon la revendication 11, **caractérisé en ce que** la ou les butées (32, 33) sont retirées après l'immobilisation ou fixation.

13. Procédé selon l'une des revendications 1 à 12, **caractérisé en ce que** la région de bord du panneau creux (11) est refroidie lors de la compression.

14. Dispositif (1) pour fermer le côté frontal (55) d'un panneau creux (11) pourvu de deux couches extérieures de panneau et d'entretoises intermédiaires, sachant que le dispositif (1) présente un support (9) pour le panneau creux (11) ainsi qu'une barre ou poutre de chauffage (27) pour fondre une région de bord du panneau creux (11) et une barre ou poutre de presse (40, 41) pour comprimer les couches du panneau dans la région de bord, et sachant qu'un ensemble d'entraînement est présent, au moyen duquel les barres de chauffage et de presse (27 ; 40, 41) peuvent être déplacées transversalement à leur étendue longitudinale en va-et-vient entre une position de repos et une position de travail, **caractérisé en ce que** les barres de chauffage et de presse (27 ; 40, 41) sont des éléments distincts et l'ensemble d'entraînement présente un propre entraînement (20-25) pour le mouvement relatif entre le panneau creux (11) se trouvant dans le support (9) et la barre de chauffage (27), ainsi qu'un propre entraînement (47, 52) de barre de presse, séparé du précédent, et **en ce que** la barre de chauffage peut être approchée au moins jusque directement contre le côté frontal (55) du panneau creux (11).

15. Dispositif selon la revendication 14, **caractérisé en ce que** la barre ou poutre de chauffage est réalisée sous forme de lame chauffée qui peut être introduite entre les couches de panneau d'un panneau creux (11) se trouvant dans le support (9).

16. Dispositif selon la revendication 14 ou 15, **caractérisé en ce que** la barre ou poutre de chauffage présente un chauffage par rayonnement.

17. Dispositif selon l'une des revendications 14 à 16, **caractérisé en ce que** l'entraînement est réalisé sous forme d'entraînement (20-25) de barre ou poutre de chauffage qui permet de produire un mouvement de la barre ou poutre de chauffage (27) par rapport au support (9).

18. Dispositif selon l'une des revendications 14 à 17, **caractérisé en ce que** la barre ou poutre de chauffage (27) est pourvue d'un revêtement antiadhésif.

19. Dispositif selon l'une des revendications 14 à 18, **caractérisé en ce que** la barre ou poutre de chauffage (27) est guidée en déplacement linéaire.

20. Dispositif selon l'une des revendications 14 à 19, **caractérisé en ce que** l'entraînement de barre de chauffage présente plusieurs vérins de pression (20-25) répartis sur sa longueur, au moyen desquels la barre ou poutre de chauffage (27) peut être déplacée.

21. Dispositif selon l'une des revendications 14 à 20, **caractérisé en ce que** la barre ou poutre de presse est réalisée sous forme de barre façonnée avec une rainure façonnée comme surface de pressage, qui peut être déplacée contre le bord d'un panneau creux se trouvant dans le support.

22. Dispositif selon l'une des revendications 14 à 20, **caractérisé en ce qu'**il est prévu une seule barre ou poutre de presse qui peut être déplacée, en direction d'un élément de contre-appui solidaire de l'appareil, essentiellement transversalement au plan d'un panneau creux se trouvant dans le support.

23. Dispositif selon l'une des revendications 14 à 20, **caractérisé en ce qu'**il est prévu deux barres ou poutres de presse (40, 41) s'étendant parallèlement entre elles, qui peuvent être rapprochées et éloignées l'une de l'autre essentiellement transversalement au plan d'un panneau creux (11) se trouvant dans le support (9).

24. Dispositif selon la revendication 23, **caractérisé en ce que**, dans la position de travail, une des deux barres ou poutres de presse (40, 41) s'applique contre une butée réglable, au moyen de l'entraînement de barre ou poutre de presse, avec une force qui est supérieure à la force agissant dans la position de travail de l'autre barre ou poutre de presse (40).

25. Dispositif selon l'une des revendications 14 à 24, **caractérisé en ce que** la ou les barres ou poutres de presse (40, 41) sont montées à pivotement sur des bras pivotants (43, 49).

26. Dispositif selon l'une des revendications 14 à 25, **caractérisé en ce que** l'entraînement de barre ou poutre de presse présente plusieurs vérins de pression (47, 52) répartis sur la longueur de la ou des barres ou poutres de presse (40, 41), au moyen desquels la barre ou poutre de presse respective (40, 41) peut être déplacée.

27. Dispositif selon l'une des revendications 14 à 26, **caractérisé en ce que** la ou les barres ou poutres de presse (40, 41) présentent au moins un canal de refroidissement pour le passage d'un agent de refroidissement.

28. Dispositif selon l'une des revendications 14 à 27, **caractérisé en ce qu'**un ensemble de butée (29, 30), avec au moins un élément de butée (32, 33) contre lequel peut être appliqué le côté frontal (55) d'un panneau creux (11) se trouvant dans le support (9), est associé au support (9).

29. Dispositif selon la revendication 28, **caractérisé en ce que** l'ensemble de butée (29, 30) présente un entraînement de butée (31), relié à l'élément de butée (32, 33), au moyen duquel le ou les éléments de butée peuvent être déplacés en va-et-vient entre une position de butée et une position de repos, sachant que le ou les éléments de butée (32, 33) se trouvent dans la position de repos en dehors de la plage de déplacement de la barre ou poutre de chauffage (27).

30. Dispositif selon la revendication 29, **caractérisé en ce que** le ou les éléments de butée (32, 33) sont guidés en déplacement linéaire et en oblique par rapport à la direction de déplacement de la barre ou poutre de chauffage (27).

31. Dispositif selon l'une des revendications 14 à 30, **caractérisé en ce que** le support est réalisé sous forme d'élément d'appui (9) pour l'application unilatérale du panneau creux (11).

32. Dispositif selon la revendication 31, **caractérisé en ce que** l'élément d'appui (9) possède une étendue essentiellement horizontale.

33. Dispositif selon l'une des revendications 28 à 32 et 33, **caractérisé en ce que** l'ensemble de butée (29, 30) est disposé dans la région d'une extrémité côté lame de chauffage de l'élément d'appui (9).

34. Dispositif selon l'une des revendications 31 à 33, **caractérisé en ce que** la barre ou poutre de chauffage (27) peut être déplacée parallèlement au plan de l'élément d'appui (9) et en direction et en éloignement de ce dernier.

35. Dispositif selon l'une des revendications 31 à 34, **caractérisé en ce que** la ou les barres ou poutres de presse (40, 41) sont disposées dans la région de l'extrémité côté lame de chauffage de l'élément d'appui (9) et peuvent être déplacées perpendiculairement au plan de l'élément d'appui (9).

36. Dispositif selon l'une des revendications 14 à 35, **caractérisé en ce que** le support (9) présente un ensemble d'immobilisation (53, 54) au moyen duquel le panneau creux (11) peut être immobilisé dans une position prévue sur le support (9).

37. Dispositif selon la revendication 36, **caractérisé en ce que** l'ensemble d'immobilisation présente un ensemble de serrage (53, 54).

38. Dispositif selon la revendication 36, **caractérisé en ce que** l'ensemble d'immobilisation ou de fixation présente un ensemble de production de vide.

39. Dispositif selon l'une des revendications 14 à 38, **caractérisé en ce que** la barre ou poutre de chauffage (27) peut être réglée transversalement à son étendue longitudinale et à sa direction de déplacement.

40. Dispositif selon l'une des revendications 14 à 39, **caractérisé en ce que** le support (9) peut être réglé transversalement à la surface d'appui pour le panneau creux (11).

41. Dispositif selon l'une des revendications 14 à 40, **caractérisé en ce que** la ou les barres ou poutres de presse (40, 41) peuvent être réglées, quant à leur position de repos et/ou à leur position de travail, transversalement à leur étendue longitudinale et à leur direction de déplacement.
